(19) Europäisches Patentamt
European Patent Office
Office européen des brevets

(11) **EP 2 929 178 B1**

(12) **EUROPÄISCHE PATENTSCHRIFT**

(45) Veröffentlichungstag und Bekanntmachung des Hinweises auf die Patenterteilung:
**18.04.2018 Patentblatt 2018/16**

(21) Anmeldenummer: **13815696.3**

(22) Anmeldetag: **05.12.2013**

(51) Int Cl.:
**F03D 1/06** (2006.01)

(86) Internationale Anmeldenummer:
**PCT/EP2013/075647**

(87) Internationale Veröffentlichungsnummer:
**WO 2014/086919 (12.06.2014 Gazette 2014/24)**

(54) **ROTORBLATTHINTERKANTE**

ROTOR BLADE TRAILING EDGE

BORD DE FUITE DE PALE DE ROTOR

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**

(30) Priorität: **07.12.2012 DE 102012023895**
**21.02.2013 DE 102013202881**

(43) Veröffentlichungstag der Anmeldung:
**14.10.2015 Patentblatt 2015/42**

(73) Patentinhaber: **Wobben Properties GmbH**
**26607 Aurich (DE)**

(72) Erfinder:
• **ALTMIKUS, Andree**
**26605 Aurich (DE)**
• **KAMRUZZAMAN, Mohammad**
**SO19 7DG Southampton (GB)**

(74) Vertreter: **Eisenführ Speiser**
**Patentanwälte Rechtsanwälte PartGmbB**
**Postfach 10 60 78**
**28060 Bremen (DE)**

(56) Entgegenhaltungen:
**US-A1- 2003 175 121**

EP 2 929 178 B1

**Beschreibung**

Die Erfindung betrifft die Ausbildung der Hinterkante eines Rotorblatts einer Windenergieanlage bzw. ein Verfahren zum Berechnen einer zu fertigenden Hinterkante. Weiterhin betrifft die vorliegende Erfindung eine Hinterkante für ein Rotorblatt und die Erfindung betrifft ein Rotorblatt mit einer Hinterkante. Außerdem betrifft die vorliegende Erfindung eine Windenergieanlage mit wenigstens einem Rotorblatt mit einer Hinterkante.

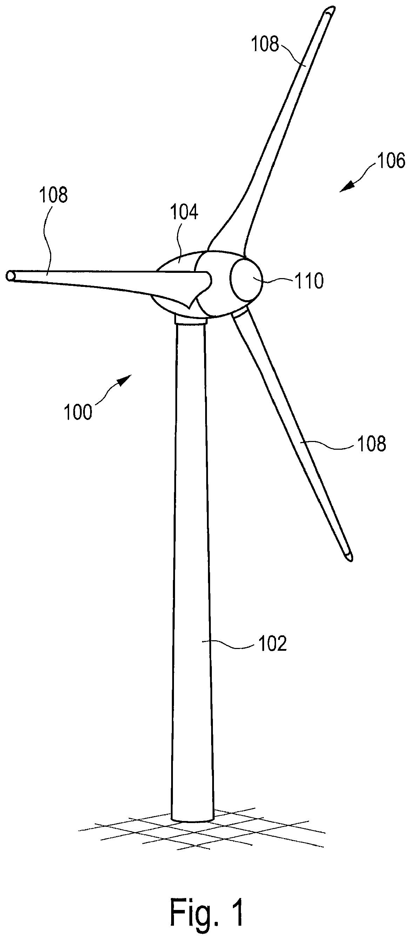

Windenergieanlagen sind allgemein bekannt und Figur 1 zeigt eine bekannte Windenergieanlage. Für die Effizienz der Windenergieanlage ist das Design des Rotorblatts bzw. der Rotorblätter ein wichtiger Aspekt. Neben dem grundsätzlichen Grundriss des Rotorblatts hat auch die Rotorblatthinterkante einen Einfluss auf das Verhalten des Rotorblatts.

In diesem Zusammenhang wurden auch schon sägezahnförmige Hinterkanten bzw. Hinterkanten mit einem gezackten Verlauf mit mehreren Zacken vorgeschlagen. Das Vorsehen einer solchen sägezahnförmigen Hinterkante kann aber aufwendig sein und es besteht die Gefahr, dass das Vorsehen einer gezackten Hinterkante bzw. sägezahnförmigen Hinterkante einen Aufwand verursacht, der in keinem angemessenen Verhältnis zur Wirkung steht.

Aus EP 0 652 367 A1 ist es bekannt, die Hinterkante in Längsrichtung des Hauptholms des Rotorblatts sägezahnförmig auszubilden. Hierdurch soll eine Geräuschreduktion erreicht werden.

Aus EP 1 314 885 B1 ist es bekannt, die Hinterkante in Längsrichtung des Hauptholms des Rotorblatts sägezahnförmig und gleichzeitig elastisch biegsam auszubilden. Hiermit soll eine Steigerung des Drehmoments erreicht werden, das das Rotorblatt auf den Generator ausübt.

US 2003/0175121 A1 wird als nächstliegender Stand der Technik angesehen und zeigt ein Windenergieanlagenrotorblatt mit einer gezackten Hinterkante, wobei die Zacken eine Höhe und einen Abstand aufweisen.

Der vorliegenden Erfindung liegt somit die Aufgabe zugrunde, wenigstens eines der o.g. Probleme zu adressieren. Insbesondere soll eine Lösung vorgeschlagen werden, die die Wirksamkeit eines Rotorblattes einer Windenergieanlage weiter steigert.

Aufgabe der Erfindung ist es insbesondere, die Effektivität eines Rotorblatts ohne Zunahme von Geräuscheffekten weiter zu steigern. Zumindest soll eine alternative Lösung geschaffen werden.

Dazu wird ein Rotorblatt vorgeschlagen, dessen Hinterkante in Längsrichtung des Hauptholms des Rotorblatts sägezahnförmig ausgebildet ist, wobei Abstand und/oder Länge funktional von den lokalen Anströmbedingungen am Blattschnitt und der sich daraus entwickelnden turbulenten Grenzschichtdicke bzw. den Kohärenzlängenskalen der sich darin ausbildenden Turbulenzballen mit ihren Druckfluktuationen abhängen. Vorzugsweise soll sich die Länge der einzelnen Zähne von Zahn zu Zahn ändern.

Somit wird eine sägezahnförmige Hinterkante vorgeschlagen, die entsprechend mehrere Zacken oder Zähne aufweist - was hier synonym verwendet wird - die von dem Rotorblatt aus im Wesentlichen nach hinten, nämlich der bestimmungsgemäßen Drehbewegung des Rotors abgewandten Seite spitz zulaufen. Entsprechend laufen die Zwischenräume jeweils zwischen zwei Zacken bzw. Zähnen in Richtung zum Rotorblatt hin spitz zu. Solche Zacken weisen eine Höhe auf, nämlich der Abstand von der Grundlinie, an der die spitz zu laufenden Zwischenräume enden, zu der Scheitellinie, an der die spitz zu laufenden Zacken enden, als die Scheitellinie, die die Zackenspitzen verbindet. Diese Grundlinie und diese Scheitellinie können gekrümmte Linien sein und können einen zueinander über die Blattlänge veränderlichen Abstand aufweisen.

Die Länge der einzelnen Zähne kann synonym auch als Höhe der Zähne bzw. Höhe der Zacken, also Zackenhöhe bezeichnet werden.

Erfindungsgemäß wird ein Verfahren zum Berechnen einer zu fertigenden Hinterkante gemäß Ansprüche 1 oder 6 vorgeschlagen. Demnach wird ein Windenergieanlagen-Rotorblatt eines aerodynamischen Rotors einer Windenergieanlage gemäß Ansprüchen 7 oder 8 vorgeschlagen. Das Rotorblatt weist in Bezug auf diesen Rotor, in dem das Rotorblatt eingesetzt werden soll bzw. eingesetzt wird, radiale Positionen auf. Eine radiale Position der Hinterkante und des Rotorblattes bezieht sich somit immer auf diesen Rotor, also auf den Abstand zur Drehachse des Rotors. Diese Betrachtungsweise wird auch für ein zunächst noch nicht montiertes Rotorblatt zugrundegelegt. Ein Rotorblatt einer Windenergieanlage ist grundsätzlich auf eine spezielle Windenergieanlage abgestimmt, insbesondere auf den Rotor der dieses Rotorblatt und üblicherweise zwei weiter Rotorblätter aufweist.

Das Rotorblatt weist dazu zu jeder radialen Position ein lokales Blattprofil auf. Mit anderen Worten weist jeder Blattschnitt abhängig seiner radialen Position ein eigenes Blattprofil auf.

Die Hinterkante weist einen gezackten Verlauf mit mehreren Zacken auf, was auch als sägezahnförmig bezeichnet werden kann. Die einzelnen Zacken sind hierbei aber im Grunde spiegelsymmetrisch, weisen also zwei schräge, etwa gleiche Flanken auf. Insbesondere weisen diese Zähne regelmäßig nicht eine senkrechte und eine schräge Flanke auf, sondern zwei schräge Flanken.

Jede Zacke weist eine Zackenhöhe und eine Zackenbreite auf. Die Zackenhöhe ist der bereits beschriebene Abstand zwischen einer Grundlinie und einer Scheitelline. Die Zackenbreite ist der Abstand des jeweiligen Endes der beiden spitz zu laufenden Zwischenräume, die die Zacke begrenzen. In erster Näherung ist die Breite der Zacke der Abstand ihrer Zackenspitze zur Zackenspitze einer benachbarten Zacke. Zwar unterscheiden sich die Zacken einer vorgeschlagenen zackenförmigen Hinterkante vorzugsweise voneinander, allerdings ist dieser Unterschied für unmittelbar benachbarte Zacken vergleichsweise gering.

Es wird nun vorgeschlagen, dass die Zackenhöhe und außerdem oder alternativ die Zackenbreite in Abhängigkeit ihrer radialen Position berechnet wird. Es ergibt sich somit für jede Zacke abhängig ihrer radialen Position eine eigene Berechnung. Im Ergebnis entsteht hierdurch eine Hinterkante mit vielen Zacken, die individuell berechnet wurden und entsprechend individuelle Größen aufweisen können, die sich insbesondere quasi kontinuierlich über die Rotorblattlänge bzw. mit zunehmender oder abnehmender radialer Position verändern.

Die Zackenhöhe und außerdem oder alternativ die Zackenbreite wird vorzugsweise abhängig vom lokalen Blattprofil ihrer radialen Position berechnet. Es wird somit zu einem Zacken das Blattprofil seiner radialen Position berücksichtigt, also das Profil des Blattschnittes zu dieser radialen Position.

Gemäß einer Ausgestaltung wird vorgeschlagen, dass die Zackenhöhe größer ist als die Zackenbreite und die Zackenbreite aus der Zackenhöhe berechnet wird. Für diese Berechnung liegt das Verhältnis von Zackenhöhe zu Zackenbreite im Bereich von 0,5 bis 10, insbesondere 3 bis 5. Vorzugsweise beträgt es etwa den Wert 4, insbesondere den Wert 2. Die Zackenbreite $\lambda$ berechnet sich somit aus der Zackenhöhe H nach der Formel:

$$\lambda = H / k_n \text{ mit } k_N = \begin{bmatrix} 0,5...10 \end{bmatrix}, \text{insbesondere} \qquad k_N = 2$$

Der Zacken ist somit vergleichsweise schlank und insbesondere in einem spitzen Winkel zulaufend. Ein Verhältnis in diesem Bereich hat sich als besonders vorteilhaft zur Geräuschminimierung erwiesen, jedenfalls für solchen individuell berechneten Zacken. Besonders dann, wenn die Zackenhöhe zur Zackenbreite in einem festen Verhältnis steht, ist es gleichbedeutend, ob zuerst die Zackenhöhe und dann daraus die Zackenbreite berechnet wird, oder ob erst die Zackenbreite und dann daraus die Zackenhöhe berechnet wird.

Vorzugsweise weisen die Zacken zueinander unterschiedliche Zackenbreiten und/oder unterschiedliche Zackenhöhen auf und unterscheiden sich hierdurch individuell voneinander.

Vorzugsweise ist die Berechnung so ausgelegt, dass bei Hinterkanten für Schwachwindstandorte die Zackenhöhe der Zacken bezogen auf die Profiltiefe mit zunehmendem Radius der radialen Position ihrer Zacken abnimmt während bei Zackenhinterkanten für Starkwind-Standorte die Zackenhöhe der Zacken bezogen auf die Profiltiefe mit zunehmendem Radius der radialen Position ihrer Zacken zunimmt. Dies ergibt sich aus der Windklassenspezifischen Blattauslegung.

In der Windenergiebranche ist es üblich, Standorte nach Windklassen zu klassifizieren. Bei Starkwindstandorten, die insbesondere in Küstennähe oder an Offshore-Standorten vorliegen, ist grundsätzlich mit stärkerem Wind zu rechnen. Die Windenergieanlage, insbesondere die Rotorblätter werden entsprechend ausgelegt, nämlich so, dass sie starken Winden standhalten können und die Windenergieanlage dabei auch betrieben werden kann, wobei sie bei schwachen Winden weniger Energie dem Wind entnehmen können, als dies eine Windenergieanlage für Schwachwindstandorte könnte.

Entsprechend sind Windenergieanlage für Schwachwindstandorte, die insbesondere in Inlandbereichen vorherrschen, so ausgelegt, dass sie starken Winden nicht oder zumindest nicht im laufenden Betrieb standhalten müssen, zumindest bei Windstärken abgeregelt werden müssten, bei denen eine Windenergieanlage für einen Starkwindstandort noch nicht abgeregelt werden muss. Dafür kann eine solche Windenergieanlage für Schwachwindstandorte bei schwachem Wind diesem mehr Energie entnehmen. Solche Unterteilungen sind dem Fachmann geläufig und mitunter nimmt er weitere Unterunterteilungen vor.

Hierzu wird gemäß einer Ausführungsform vorgeschlagen, dass die Berechnung so ausgestaltet ist, dass sich Zackenhöhen bezogen auf die Profiltiefe für Rotorblätter von Windenergieanlagen für Schwachwindstandorte mit zunehmendem Radius verringern. Bspw. kann bei einer Hinterkante für einen Schwachwindstandort die Steigung der Änderung der Zackenhöhe H

$$\frac{\partial(H / c)}{\partial(r / R)} = \begin{bmatrix} -15...-25 \end{bmatrix}, \text{insbesondere} = -20$$

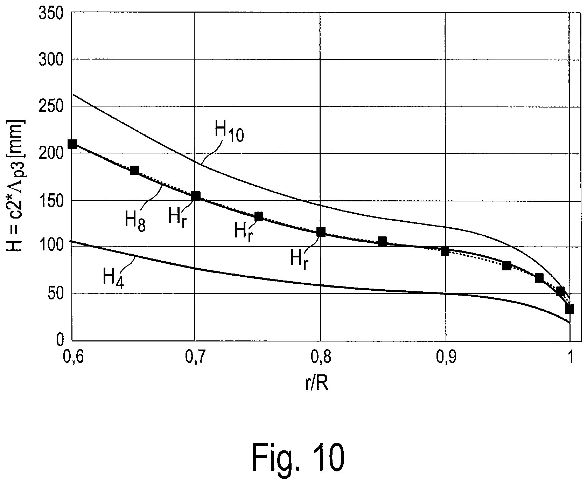

für einen normierten Radius von 0,6 bis 0,8 bezogen auf den maximalen Radius betragen. Es liegt also eine Abnahme der Zackenhöhe vor und hier wird im Zähler die Zackenhöhe H bezogen auf die Profiltiefe c und im Zähler der Radius r bezogen auf den maximalen Radius des Rotorblattes R betrachtet. Zwischen r/R = 0,75 und r/R = 0.9 weist die auf die Profiltiefe bezogene Zackenhöhe vorzugsweise einen konstanten Verlauf auf, um erst am r/R=0,9 wieder zum maximalen Radius R hin abzufallen. Dies wird auch in der Figur 10 verdeutlicht.

Für eine Hinterkante für eine Windenergieanlage gleicher Leistungsklasse, aber für einen Starkwindstandort kann das entsprechende Verhältnis positiv sein und +20 betragen, weil die Zackenhöhe, die auch als Zackentiefe bezeichnet werden kann, zunimmt. Die Zackenhöhe erreicht bei 0,85r/R ein Maximum und fällt dann streng monoton fallend zur Blattspitze hin ab.

Eine solche windklassenabhängige Berechnung der Hinterkante trägt den unterschiedlichen Problemen Rechnung, die je nach Windklasse auftreten.

Vorzugsweise wird die Zackenhöhe und/oder die Zackenbreite über einen polynomialen Zusammenhang von ihrem lokalen Radius abhängig berechnet, vorzugsweise über einen polynomialen Zusammenhang vierten bis achten Grades, insbesondere fünften oder sechsten Grades, insbesondere sechsten Grades für Schwachwindstandorte und fünften Grades für Starkwindstandorte. Die charakteristischen Verläufe der Höhen der Zacken können sich zwischen Schwachwindstandorten und Starkwindstandorten grundsätzlich unterscheiden. Dies kann berücksichtigt werden indem für Schwachwindstandorte und Starkwindstandorte Polynome unterschiedlichen Grades zu verwenden.

Vorzugsweise erfolgt die Berechnung abhängig eines oder mehrerer zu erwartender Geräuschspektren. Außerdem oder alternativ erfolgt die Berechnung abhängig eines oder mehrerer Betriebspunkte. Es wird somit vorgeschlagen, das Verhalten der Windenergieanlage in zumindest einem Betriebspunkt konkret zu berücksichtigen. Ein solcher Betriebspunkt ist insoweit ein idealisierter, stationärer Betriebspunkt, der insbesondere durch eine Windgeschwindigkeit, eine Drehzahl des Rotors der Windenergieanlage und/oder eine erzeugte Leistung der Windenergieanlage definiert wird. Auch der Anstellwinkel des Rotorblatts zum Wind kann diesen Betriebspunkt beeinflussen.

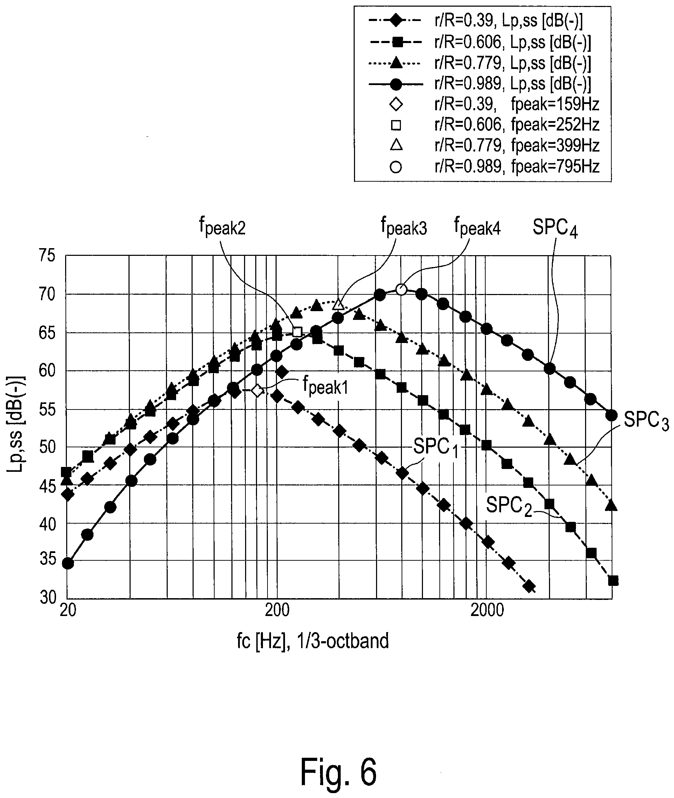

Für wenigstens einen solchen Betriebspunkt wird nun ein zu erwartendes Geräuschspektrum bestimmt, nämlich ein Geräuschpegel oder eine Geräuschstärke oder ein Lärmpegel in Abhängigkeit der Frequenz dieses Geräusches. Hierbei ergibt sich in der Regel ein frequenzabhängiger Verlauf mit einem Maximum. Dieses Spektrum wird zur Berechnung herangezogen. Insbesondere wird von diesem Spektrum die Frequenz berücksichtigt, bei der das Maximum auftritt. Diese Frequenz kann Scheitelfrequenz oder Spitzenfrequenz genannt werden und wird auch im deutschen Sprachgebrauch häufig mit dem Begriff "Peakfrequenz" bezeichnet. Wird nun der Betriebspunkt verändert, stellt sich auch ein neues Spektrum und damit eine neue Peakfrequenz ein. So können, für jede Zacke individuell, zu mehreren Betriebspunkten Frequenzspektren und damit Peakfrequenzwerte aufgenommen werden. Zur Berechnung der betreffenden Zacken wird eine Peakfrequenz verwendet und dazu kann aus den mehreren Peakfrequenzen, die bestimmt wurden, eine ausgewählt werden. Die verwendete Peakfrequenz kann auch als Mittelwert aus den mehreren aufgenommenen Peakfrequenzen gebildet werden. Die Aufnahme und Auswertung von Frequenzspektren ist auch exemplarisch in der Figur 6 erläutert.

Für die Aufnahme dieser Frequenzspektren und schließlich der jeweiligen Peakfrequenzen können bspw. Untersuchungen in einem Windkanal vorgenommen werden. Ebenfalls existieren Simulationsmethoden, um solche Spektren und Peakfrequenzen zu ermitteln.

Der eingestellte Betriebspunkt und soweit zutreffend auch die Veränderung der Betriebspunkte legen insbesondere reale Betriebspunkte zu Grunde. Hierbei arbeiten viele Steuerungsverfahren einer Windenergieanlage so, dass jeder Windgeschwindigkeit im Grunde ein Betriebspunkt zugeordnet ist. Zumindest kann hiervon vereinfachend ausgegangen werden, wenn Effekte wie unterschiedliche Turbulenzen, sehr starker Wind, sehr stark ansteigender oder sehr stark abfallender Wind vereinfachend unberücksichtigt bleiben. Vorzugsweise werden somit zwei oder drei oder vier konkrete Betriebspunkte aus dem Bereich der Windgeschwindigkeit ausgewählt, den die betreffende Windenergieanlage abdecken soll.

In die Berechnung der jeweiligen Zacke, insbesondere Zackenhöhe, fließt vorzugsweise auch die effektive Anströmgeschwindigkeit ein, die dem jeweiligen Betriebspunkt zugeordnet ist. Die effektive oder lokale Anströmgeschwindigkeit $V_{eff}$ ist diejenige Geschwindigkeit, die sich aus Sicht des Rotorblattes an der betreffenden Stelle, also an der betreffenden radialen Position aus der vektoriellen Addition der Windgeschwindigkeit und der Bewegungsgeschwindigkeit des Rotorblattes an dieser Stelle einstellt.

Vorzugsweise erfolgt die Berechnung abhängig des jeweiligen lokalen Profils. Das Profil fließt somit in die Berechnung ein oder kann auch bei Untersuchungen im Windkanal in die Messungen einfließen. Auch die lokale Anströmgeschwindigkeit kann von dem Profil und/oder von der Stellung des Rotorblattes und damit von der Stellung des Profils abhängen. Erfindungsgemäß erfolgt die Berechnung der Zackenhöhe H einer vorgegebenen radialen Position aus der zugehörigen Anströmgeschwindigkeit $V_{eff}$, der zugehörigen Peakfrequenz $f_{peak}$ des Geräuschspektrums eines Betriebspunkts und abhängig von einem vorbestimmten Faktor k, der empirisch bestimmt werden kann und bspw. auch als Erfahrungswert vorliegen kann. Darauf basierend berechnet sich die Zackenhöhe H dann nach der Formel:

$$H = k \cdot \frac{V_{eff}}{f_{peak}}.$$

Dieser Berechnung liegt die folgende Überlegung zugrunde.
Die Zackenhöhe H berechnet sich aus der Kohärenzlängenskala $\Lambda_{p,3}$ bzw. $\Lambda_{p3}$ der turbulenten Druckfluktuation im Sinne und mit Hilfe des Corcos Modells [3] und unter Verwendung eines konstanten Faktors $c_2$ nach der folgenden Gleichung:

$$H = c_2 \cdot \Lambda_{p3}.$$

Der Faktor $c_2$ kann empirisch ermittelt werden, bspw. aus Testmessungen. Es können für $c_2$ auch Erfahrungswerte verwendet werden. $\Lambda_{p3}$ ist eine Funktion des Radius des Rotors, in dem das Rotorblatt eingesetzt wird. Die Kohärenz-längenskala $\Lambda_{p3}$ kann aus der Konvektionsgeschwindigkeit $U_c$ und der Scheitelfrequenz $f_{peak}$, die auch im deutschen Sprachraum als Peakfrequenz bezeichnet wird, nach folgender Formal berechnet werden:

$$\Lambda_{p3} = \frac{U_c}{\left(2 \cdot \pi \cdot f_{peak}\right)}.$$

Die Konvektionsgeschwindigkeit $U_c$ berechnet sich aus der effektiven bzw. lokalen Anströmgeschwindigkeit $V_{eff}$ am Blattschnitt über die Konstante $c_1$, die empirisch durch Versuche oder Simulationen ermittelt werden kann und insbesondere den Wert 0,7 hat ($c_1$=0,7), nach der Gleichung:

$$U_c = c_1 \cdot V_{eff}$$

Die effektive bzw. lokale Anströmgeschwindigkeit $V_{eff}$ wird mit Hilfe einer Blattelement-Impuls-Methode berechnet, die auch unter der Abkürzung BEM (aus der englischen Bezeichnung "Blade Element Momentum method") bekannt ist.

In diese Berechnung geht der Einstellwinkel des Rotorblattes, die Drehzahl des Rotors, die Windgeschwindigkeit sowie der konkrete Radius und das Blattprofil des Blattschnittes an der radialen Position und seinem lokalen Verwindungswinkel auf dem Rotorblatt ein, für die die Anströmgeschwindigkeit $V_{eff}$ und damit die Zackenhöhe H berechnet werden soll. Die Berechnung erfolgt somit für einen konkreten Betriebspunkt.

Die Peakfrequenz $f_{peak}$ ist die Frequenz, bei der für den untersuchten Betriebspunkt und die untersuchte radiale Position am Rotorblatt, bezogen auf den Rotor, der größte Geräuschpegel auftritt bzw. zu erwarten ist. Es ist also die Frequenz, bei der ein Hinterkanntengeräuschspektrum bzw. Hinterkanntenlärmspektrum sein Maximum aufweist.

Die Peakfrequenz $f_{peak}$ kann empirisch ermittelt werden, z.B. durch dedizierte Untersuchungen im Windkanal, z.B. mit dynamischen Druckaufnehmern an der Hinterkante des Windkanalprüflings, oder sie kann mit einer numerischen aeroakustischen Simulation Für die lokale Reynoldszahl Re berechnet werden. Die lokale Reynoldszahl ergibt sich aus dem lokalen Anströmwinkel a, der lokalen Anströmgeschwindigkeit und der lokalen Profiltiefe, und kann mittels der genannte BEM auch als Ergebnis gewonnen werden. Weiterhin fließt die zweidimensionale Profilgeometrie des lokalen Blattschnittes ein.

Die Zackenhöhe H berechnet sich somit aus dem folgenden Verhältnis der Anströmgeschwindigkeit $V_{eff}$ zur Peakfrequenz $f_{peak}$ des Geräuschspektrums nach der Formel:

$$H = \frac{c_2 \cdot c_1 \cdot V_{eff}}{\left(2 \cdot \pi \cdot f_{peak}\right)} = \frac{k \cdot V_{eff}}{f_{peak}}$$

mit

$$k = \frac{c_2 \cdot c_1}{\left(2 \cdot \pi\right)}.$$

Dabei sind $V_{eff}$ und $f_{peak}$ von dem Anstellwinkel des Rotorblattes, der Drehzahl des Rotors, der Windgeschwindigkeit sowie dem konkreten Radius und dem Blattprofil des Blattschnittes der radialen Position auf dem Rotorblatt abhängig, zu der die Zackenhöhe H bestimmt werden soll.

Erfindungsgemäß wird zudem eine Hinterkante vorgeschlagen. Eine solche Hinterkante zeichnet sich durch einen gezackten Verlauf auf, der Zacken mit Zackenhöhe und Zackenbreite aufweist, wobei die Zackenhöhe und/oder die Zackenbreite abhängig ist von ihrer radialen Position und/oder vom lokalen Blattprofil ihrer radialen Position.

Es ergeben sich somit die Zusammenhänge, Erläuterungen und Vorteile gemäß wenigstens einer Ausführungsform der beschriebenen Verfahren zum Berechnen einer zu fertigenden Hinterkante.

Vorzugsweise wird eine Hinterkante vorgeschlagen, die mit einem Verfahren gemäß einer der oben beschriebenen Ausführungsformen berechnet ist.

Eine Hinterkante für ein Rotorblatt kann auch als Rotorblatthinterkante bezeichnet werden. Erfindungsgemäß erfolgt die Berechnung der Zackenhöhe H zu einer vorgegebenen radialen Position aus der zugehörigen Kohärenzlängenskala $\Lambda_{p3}$. Unter der Berücksichtigung eines konstanten Faktors $c_2$ mit der Formel:

$$H = c_2 \cdot \Lambda_{p3}.$$

Somit fließt für die Zacke des betreffenden Radius die Kohärenzlängenskala desselben Radius in die Berechnung ein. Die Kohärenzlängenskala $\Lambda_{p3}$ ist eine von dem Radius des Rotors abhängige Funktion und entsprechend ergibt sich für die Zackenhöhen der Hinterkante eine vom Radius abhängige Funktion. Durch den konstanten Faktor $c_2$ kann diese Funktion in ihre Amplitude proportional vergrößert oder verkleinert werden, wodurch sich der grundsätzliche Verlauf dieser Funktion aber nicht ändert. Durch eine Kurve mit einem sehr kleinen $c_2$ und eine weitere Kurve mit einem sehr großen $c_2$ kann ein Bereich aufgespannt werden, in dem eine vorteilhafte Funktion für die Zackenhöhen ausgewählt werden kann. Erfindungsgemäß wird ein Rotorblatt für eine Windenergieanlage mit einer Hinterkante gemäß wenigstens einer beschriebenen Ausführungsform vorgeschlagen.

Außerdem wird eine Windenergieanlage mit einem, insbesondere drei solchen Rotorblättern vorgeschlagen. Nachfolgend wird die Erfindung exemplarisch anhand von Ausführungsbeispielen unter Bezugnahme auf die begleitenden Figuren näher erläutert.

Figur 1      zeigt eine Windenergieanlage schematisch in einer perspektivischen Ansicht.

Figur 2      zeigt schematisch ein Rotorblatt mit einer Hinterkante mit einem gezackten Verlauf mit mehreren Zacken.

Figur 3      zeigt schematisch einen Ausschnitt eines Rotorblatts in einer Draufsicht mit einer schematischen Kontur für eine Starkwindanlage und gestrichelt gezeichnet mit einer dazu abweichenden Kontur für eine Schwachwindanlage.

Figur 4      zeigt schematisch einen Blattschnitt eines Rotorblatts mit schematisch dargestelltem Verwirbelungsbereich.

Figur 5      zeigt schematisch den Verlauf der Zackenhöhe H gemäß wenigstens einer Ausführungsform in Abhängigkeit des Radius.

Figur 6      zeigt Frequenzspektren an exemplarisch ausgewählten Radiuspositionen einer Ausführungsform.

Figur 7      zeigt lokale, aerodynamische Parameter, die einer BEM-Berechnung zugrundeliegen bzw. damit berechnet werden.

Figur 8      zeigt für eine Ausführungsform die Peakfrequenz in Abhängigkeit des Radius.

Figur 9      zeigt in einem Diagramm verschiedene mögliche Verläufe der Zackenhöhe H in Abhängigkeit des Radius für eine Starkwindanlage.

Figur 10      zeigt in einem Diagramm verschiedene mögliche Verläufe der Zackenhöhe H in Abhängigkeit des Radius für eine Schwachwindanlage.

Figur 11      zeigt in einem Diagramm den Verlauf von Zackenhöhen, die auf die jeweilige lokale Profiltiefe normiert sind, über dem dimensionslosen Radius für Starkwind- und Schwachwind-auslegung.

Figuren 12a und 12b      zeigen eine Hinterkante für eine Starkwindanlage.

Figuren 13a und 13b      zeigen eine Hinterkante für eine Schwachwindanlage.

Die Erläuterung der Erfindung anhand von Beispielen unter Bezugnahme auf die Figuren erfolgt im Wesentlichen schematisch und die Elemente, die in der jeweiligen Figur erläutert werden, können darin zur besseren Veranschaulichung überzeichnet und andere Elemente vereinfacht sein. So veranschaulicht bspw. Figur 1 eine Windenergieanlage als solche schematisch, so dass die vorgesehene, zackenförmige Hinterkante nicht erkennbar ist.

Figur 1 zeigt eine Windenergieanlage 100 mit einem Turm 102 und einer Gondel 104. An der Gondel 104 ist ein Rotor 106 mit drei Rotorblättern 108 und einem Spinner 110 angeordnet. Der Rotor 106 wird im Betrieb durch den Wind in eine Drehbewegung versetzt und treibt dadurch einen Generator in der Gondel 104 an.

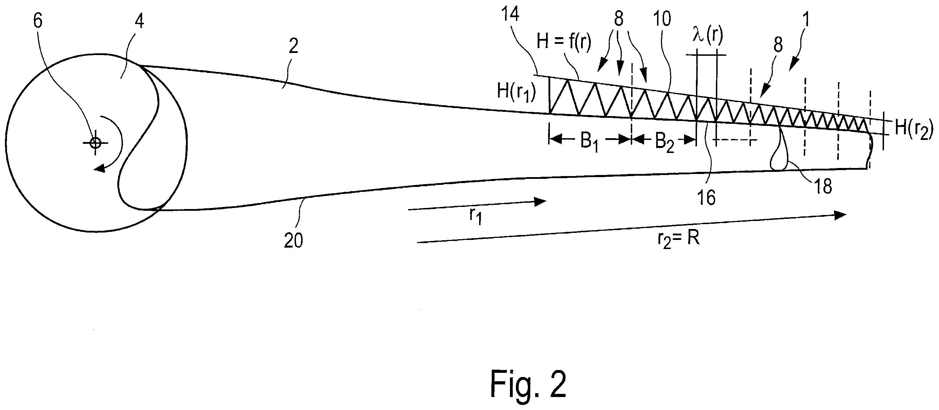

Figur 2 zeigt schematisch ein Rotorblatt 2 mit einer Rotorblatthinterkante 1, die vereinfachend auch als Hinterkante bezeichnet wird. Das Rotorblatt ist bestimmungsgemäß an einer Nabe 4 befestigt, was hier nur schematisch angedeutet ist, um sich um eine Drehachse 6 der Nabe 4 zu drehen.

Die Hinterkante 1 weist einen gezackten Verlauf mit mehreren Zacken 8 auf, die entlang des Rotorblattes 2 nebeneinander angeordnet sind. Diese Hinterkante 1 mit den Zacken 8 ist hier etwa nur an der äußeren Hälfte des Rotorblatts 2 angeordnet. Jeder Zacken weist eine radiale Position auf, die sich auf die Drehachse 6 bezieht. Der erste Zacken 8 beginnt bei dem Radius $r_1$ und die letzte Zacke 8 endet bei dem Radius $r_2$, der gleichzeitig dem Gesamtradius R des Rotorblatts 2 bezogen auf die Drehachse 6 entspricht.

Jeder Zacken 8 weist eine Höhe H auf, die vom jeweiligen Radius r abhängt. Die Höhe H der Zacken 8 ist somit eine Funktion des Radius r:

$$H = f(r).$$

Entsprechend ist die Höhe des Zackens 8 bei dem Radius $r_1$ die Höhe $H(r_1)$ und die Höhe H des letzten Zackens ist die Höhe $H(r_2)$. Die Breite jedes Zackens 8 ist in der Figur 2 mit dem griechischen Buchstaben $\lambda$ angegeben, die ebenfalls von dem jeweiligen Radius r abhängt und somit als $\lambda(r)$ angegeben ist.

Jeder Zacken 8 weist eine Zackenspitze 10 auf und zwischen zwei Zacken 8 ist jeweils ein Einschnitt mit einer Einschnittspitze 12. Eine die Zackenspitzen 10 verbindende Linie kann als Scheitellinie 14 bezeichnet werden und ist in der Figur 2 gestrichelt eingezeichnet. Eine Grundlinie oder Basislinie 16 verbindet die Einschnittspitzen 12 und kann, wie es in dem veranschaulichten Beispiel der Figur 2 der Fall ist, eine hintere Linie des Rotorblatts 2 darstellen, die eine Hinterkante des Rotorblatts 2 bilden würde, wäre die gezeigte, gezackte Hinterkante 1 nicht vorhanden.

Der Abstand zwischen Scheitellinie 14 und Grundlinie 16 ist nicht konstant und gibt zu dem jeweiligen Radius r die Höhe H der dort angeordneten Zacke 8 an. Entsprechend ändert sich auch die Höhe H der Zacken 8 abhängig von dem lokalen Radius r des Rotorblatts 2. Zur Auslegung oder Befestigung können mehrere Zacken 8 gruppiert sein, wie die gezeigten Breiten $B_1$ und $B_2$ andeuten. Die Berechnung der Zacken 8, insbesondere der Höhe H der Zacken 8 hängt von dem Profil des jeweiligen Blattschnitts ab und zur Veranschaulichung ist ein solcher Blattschnitt 18 eingezeichnet.

Die Breite $\lambda$ bzw. $\lambda(r)$ kann sich ebenfalls mit dem Radius r verändern und steht insbesondere in einem festen Verhältnis zur Höhe H des betreffenden Zackens 8. Dieses Verhältnis beträgt vorzugsweise 2, so dass die Höhe H eines Zackens 8 somit zweimal so groß ist, wie die Breite $\lambda$ desselben Zackens. Sollte, gemäß anderer Ausführungsformen, das Verhältnis der Höhe H zur Bereite $\lambda$ deutlich größer als 2 sein, kann es insbesondere aus fertigungstechnischen Überlegungen heraus sinnvoll sein, die derzeitigen Zacken 8 rechteckig oder näherungsweise rechteckig auszubilden, so dass für die Hinterkante eine Art Kammstruktur entsteht oder die Hinterkante statt Zacken Zinnen aufweist.

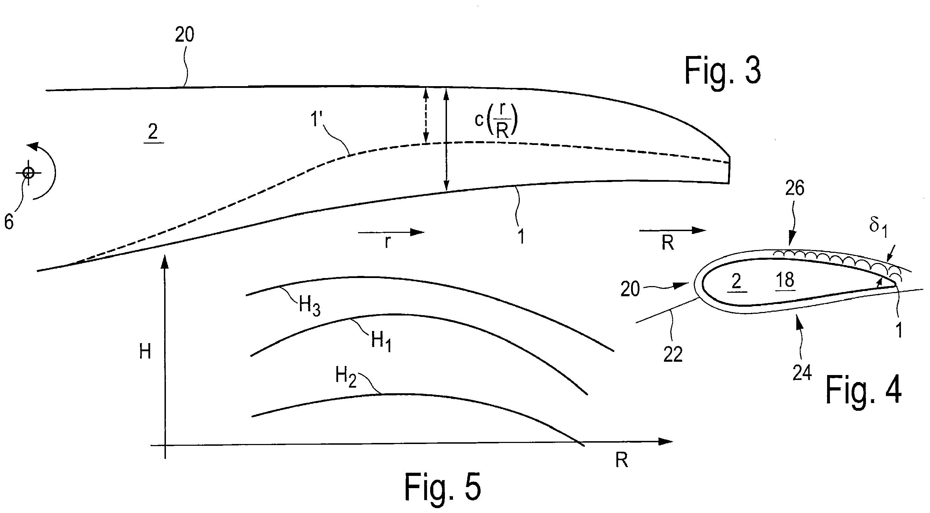

Figur 3 zeigt ein Rotorblatt 2, das sich aber von dem Rotorblatt 2 der Figur 2 unterscheiden kann. Dieses Rotorblatt 2 der Figur 3 weist eine Vorderkante 20 auf und eine Hinterkante 1, deren zackenförmiger Verlauf hier der Einfachheit halber nicht dargestellt ist. Dieses Rotorblatt 2 mit der Vorderkante 20 und der Hinterkante 1 veranschaulicht eine grundsätzliche Form eines Rotorblatts einer Starkwindanlage. Als Vergleich dazu ist eine Hinterkante 1' gestrichelt eingezeichnet, die zu einem Rotorblatt 2 einer Schwachwindanlage gehört, also zu einer Windenergieanlage für Schwachwindstandorte. Zur Veranschaulichung ist auch hier die Drehachse 6 eingezeichnet, um die Drehrichtung des Blattes 2 zu veranschaulichen und die zur Nabe, also zur Drehachse 6 gewandte Seite des Rotorblatts 2 deutlich zu machen.

Jedenfalls ist aus der Darstellung der Figur 3 zu erkennen, dass ein Rotorblatt einer Schwachwindanlage insbesondere im äußeren Bereich schlanker ausgebildet ist, als ein Rotorblatt einer Starkwindanlage. Figur 3 soll dies nur veranschaulichen und es wird darauf hingewiesen, dass ein Rotorblatt einer Schwachwindanlage bei gleicher Leistungsklasse der Windenergieanlage eher länger, also mit größerem Radius zu erwarten ist, als ein Rotorblatt einer Schwachwindanlage.

Figur 4 veranschaulicht Strömungsbedingungen an einem Rotorblatt 2 einer Windenergieanlage. Figur 4 zeigt dabei einen Blattschnitt, der bspw. der Blattschnitt 18 gemäß Figur 2 sein kann. Anströmender Wind 22, der hier nur als Linie angezeichnet ist, teilt sich an dem Rotorblatt 2 im Bereich seiner Vorderkante 20 auf und verläuft zunächst laminar. Insbesondere an der Druckseite 24 verläuft er bis in die Nähe der Hinterkante 1 laminar. An der Saugseite 26 bildet sich eine Grenzschicht, in der Wirbel oder Turbulenzen entstehen können. Mit zunehmender Nähe zur Hinterkante nimmt die Dicke der Grenzschicht zu. Die Dicke ist hier als $\delta_1$ eingezeichnet. Diese Zunahme der Grenzschichtdicke $\delta_1$ zur Hinterkante 1 hin führt dazu, dass sich im Bereich der Hinterkante 1 entsprechend größere Wirbel oder Turbulenzen einstellen. Insbesondere sind dort im Bereich der Hinterkante 1 sog. Turbulenzballen anzutreffen. Diese Turbulenzballen werden zumindest teilweise durch die vorgeschlagene zackenförmige Hinterkante zerstört bzw. auch am Aufbau behindert. Dazu sollte die Schrägstellung der Flanken der Zacken 8 (gemäß Figur 2) an diese Turbulenzballen möglichst angepasst sein. Auch die Größe der Zacken 8 bzw. ihrer Zwischenräume ist möglichst an diese Turbulenzballen anzupassen. Entsprechend wurde herausgefunden, dass die Zacken und ihre Zwischenräume weder zu groß noch zu klein sein dürfen. Sind sie groß, können sich solche Turbulenzballen ggf. zwischen zwei Zacken halten. Sind die Zacken zu klein, haben sie nur geringen Einfluss auf die Turbulenzballen. Dabei wurde erkannt, dass die Turbulenzballen in Art und Größe vom Radius ihres Auftretens abhängen können. Die Zacken passen sich somit diesen radiusabhängigen Turbulenzballen an.

Figur 5 zeigt einen beispielhaften Verlauf der Höhe H von Zacken 8 einer Hinterkante 1 in Abhängigkeit des Radius r. Der gezeigte Verlauf ist der eines Rotorblatts einer Starkwindanlage. Die Höhe H nimmt dabei mit steigendem Radius r zunächst zu und fällt dann mit weiter steigendem Radius r wieder ab. Diesen Verlauf zeigt die mittlere Kurve $H_1$. Außerdem ist eine Kurve $H_2$ dargestellt, die einen sehr niedrigen, möglichen Verlauf der Höhe H zeigt und entsprechend ist eine Kurve $H_3$ gezeigt, die entsprechend einen sehr großen Werteverlauf der Höhe H zeigt. Diese Kurven $H_2$ und $H_3$ können Grenzkurven bilden, innerhalb derer eine Kurve $H_1$ vorzugsweise ausgewählt wird.

Figur 6 zeigt vier Frequenzspektren $SPC_1$, $SPC_2$, $SPC_3$ und $SPC_4$. Dies sind Geräuschspektren oder Lärmspektren für einen Anlagen-Betriebspunkt der zugrundegelegten Windenergieanlage an vier exemplarisch ausgewählten Radiuspositionen. Diese vier Frequenzspektren $SPC_1$, $SPC_2$, $SPC_3$ und $SPC_4$ wurden an den Radiuspositionen $r_1=0{,}39$, $r_2=0{,}606$, $r_3=0{,}779$ bzw. $r_4=0{,}989$ aufgenommen. Dazu wurden entsprechend die Peakfrequenzen $f_{peak1}$, $f_{peak2}$, $f_{peak3}$ und $f_{peak4}$ bestimmt. Jedes dieser Lärmspektren weist einen Maximalpunkt auf und die zugehörigen Frequenzen werden als Peakfrequenzen $f_{peak}$ wie beschrieben weiter verwendet. Ein solches Ergebnis stellt sich somit ein, wenn zu einem Betriebspunkt der Windenergieanlage die Geräuschspektren an unterschiedlichen radialen Positionen des Rotorblatts aufgenommen werden. Daraus können eine radiusabängige Funktion der Maxima der Peakfrequenzen und/oder daraus eine radiusabhängige Funktion der sich ergebenden berechneten Zackenhöhen H(r) bestimmt werden.

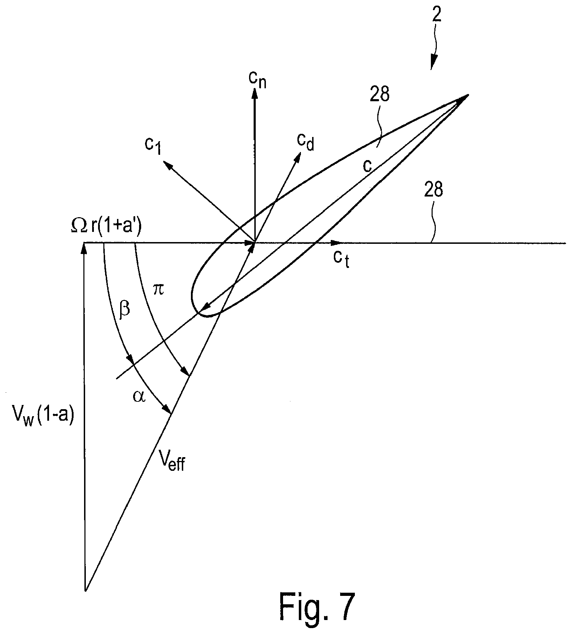

Die Figur 7 zeigt für einen beispielhaften Blattschnitt 18 eines Rotorblatts 2, das sich mit der Drehzahl Q entlang der Rotorebene 28 dreht, lokale aerodynamische Parameter, die für eine BEM-Berechnung benötigt bzw. durch diese berechnet werden. Zur Rotordrehzahl Q ist ein Vektor eingezeichnet, der der tatsächlichen Richtung der Drehzahl entgegengerichtet ist, um einen zugehörigen, der Bewegung gegengesetzten, rechnerischen Wind anzugeben. Die vektorielle Addition dieses rechnerischen Windes mit dem Wind bzw. der Windgeschwindigkeit $V_W$ führt somit zur effektiven Anströmgeschwindigkeit $V_{eff}$.

Die Figur 7 verdeutlicht dabei die Rotordrehzahl $\Omega$, den effektiven Anstellwinkel $\alpha$, den lokalen Bauwinkel $\beta$, der sich aus dem Pitchwinkel und der Verwindung des Rotorblatts zusammensetzt, und den Anströmwinkel $\pi$. Außerdem ist die lokale Profiltiefe c des gezeigten Blattschnitts 18 eingezeichnet. Weitere, relevante Größen werden in der nachfolgenden Tabelle erläutert.

| | |
|---|---|
| $\Omega$ [m/s] | Drehzahl |
| $\alpha$ [°] | Effektiver Anstellwinkel |
| $\beta$ [°] | Lokaler Einbauwinkel = lokaler Verwindungswinkel plus Blatteinstellwinkel |
| $\lambda$ [m] or [mm] | Zackenbreite |
| $\Lambda_{p,3}$ [m] oder [mm] | spannweitige Kohärenzlänge der turbulenten Druckfluktuationen als Funktion der Peakfrequenz $f_{peak}$ |
| $\varphi$ [°] | Einströmwinkel |
| $V_{eff}$ [m/s] | Effektive Anströmgeschwindigkeit |
| $V_W$ [m/s] | Windgeschwindigkeit |
| $\alpha'$ | Tangentialer Induktionsfaktor |
| $\alpha$ | Axialer Induktionsfaktor |
| $c_l$ | Auftriebsbeiwert |
| $c_n$ | Normalkraftbeiwert |

(fortgesetzt)

| | |
|---|---|
| $c_d$ | Widerstandsbeiwert |
| $c_t$ | Tangentialkraftbeiwert |
| $c[m]$ | Profiltiefe |
| $c1$ | Konstante =0.7 |
| $c2$ | Konstante =4... 12 |
| $dB(-)$ | Dezibel (ungewichtet) |
| $fc[Hz]$ | Mittenfrequenz im Terzband |
| $fpeak\ [Hz]$ | Frequenz be idem der vorhergesagte Schalldruckpegel eng. Sound Pressure Level (SPL) seinen Maximalwert hat |
| $h\ [m]$ or $[mm]$ | Halbe Zackenhöhe |
| $H[m]$ or $[mm]$ | Zackenhöhe H=2h |
| $Lp,ss\ [dB(-)]$ | Schalldruckpegel der Profilsaugseite |
| $MAX\ Lambda\ p,3$ $[mm]$ | $\Lambda_{p,3}$ Kohärenzlänge bezogen auf das Maximum des Schalldruckpegels Lp,ss und der Peakfrequenz fpeak |
| $r\ [m]$ | Lokale Radiusposition am Blatt |
| $R\ [m]$ | Rotor Radius |
| $U_c = 0.7\ V_{eff}\ [m/s]$ | Konvektionsgeschwindigkeit eng. Convective velocity |

Die Verwendung im Zusammenhang mit einer BEM-Berechnung lässt sich der Referenz [1] entnehmen.

Nun lässt sich insbesondere auch die Kohärenzlängenskala berechnen.

Die radius-/spannweitige Kohärenzlängenskala der turbulenten Druckfluktuationen wurde mit dem Corcos Modells [3] nach folgender Gleichung

$$\Lambda_{p3} = \frac{U_c}{2 \cdot \pi \cdot f_{peak}}$$

berechnet, wobei

$$U_c = c_1 \cdot V_{eff}$$

$c_1$ ist eine Konstante mit dem Wert 0.7. $U_c$ ist als Konvektionsgeschwindigkeit bekannt. Die effektive oder lokale Anströmgeschwindigkeit $V_{eff}$ am Blattschnitt der radius-/spannweitigen Position r wird durch Rechnungen mit einer Blattelement-Impuls-Methode (engl. Blade element momentum method - BEM) ermittelt, vgl. Figur 7. Die BEM liefert auch alle anderen benötigten lokalen Strömungsparameter wie den effektiven Anstellwinkel $\alpha$, Reynolds- (Re) und Mach- (Ma) Zahlen. Der Parameter $f_{peak}$ ist die Frequenz bei der das Hinterkanten-Lärmspektrum der Grenzschicht sein Maximum aufweist. Dieser Parameter kann entweder durch dedizierte Windkanal-Experimente am Profil bestimmt werden, bei denen das Frequenz-Spektrum der Wanddruckfluktuationen der turbulenten Grenzschicht an einem Punkt in unmittelbarer Nähe zur Profil-Hinterkante vermessen wird, oder durch ein beliebiges theoretisches Lärmvorhersage-Modell auf numerischem Wege ermittelt werden.

Das Lärmspektrum und die Peakfrequenz $f_{peak}$ kann empirisch ermittelt werden, z.B. durch dedizierte Untersuchungen im Windkanal, z.B. mit dynamischen Druckaufnehmern an der Hinterkante des Windkanalprüflings, oder sie kann mit einer numerischen aeroakustischen Simulation Für die lokale Reynoldszahl Re berechnet werden. Die lokale Reynoldszahl ergibt sich aus dem lokalen Anströmwinkel a, der lokalen Anströmgeschwindigkeit und der lokalen Profiltiefe, und kann mittels der genannte BEM auch als Ergebnis gewonnen werden. Weiterhin fließt die zweidimensionale Profilgeometrie des lokalen Blattschnittes ein.

$\Lambda_{p3}$ wird dabei für jedes Profil entlang der Blattspannweite durch Anwendung des oben beschriebenen Prozesses bestimmt.

Für die Definition der lokalen geometrischen Dimension der Hinterkantenzacken wurden folgende Formeln verwendet:

Zackenhöhe H als Funktion des dimensionslosen Radius

$$H\left(\frac{r}{R}\right) = c_2 . \Lambda_{p3}\left(\frac{r}{R}\right)$$

Und Zackenabstand

$$\lambda = \frac{H}{2}$$

Wobei $c_2 = c_{onst}$ eine empirische Konstante im Wertebereich von 4 bis 15 ist. In einer bevorzugten Ausführung ist $c_2 = 8$.

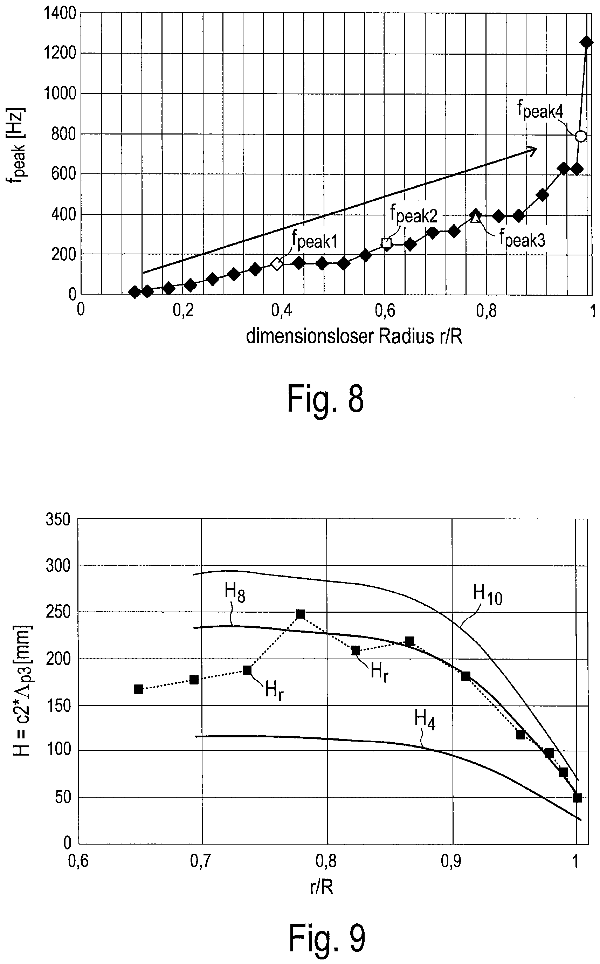

Figur 8 zeigt ein Diagramm, das die Peakfrequenz $f_{peak}$ in Abhängigkeit des Radius für einen Betriebspunkt darstellt. Die Peakfrequenzen $f_{peak1}$ bis $f_{peak4}$ entsprechen denen in Figur 6 und wurden erhalten wie zu Figur 6 erläutert. Die Darstellung wählt für den Radius die dimensionslose Darstellung, nämlich den Radius r normiert auf den Maximalradius R. Zur Veranschaulichung sind viele aufgenommene, vom Radius r abhängige Peakfrequenzen eingezeichnet und jeweils mit einer Linie verbunden worden. Die Darstellung zeigt, dass die Peakfrequenzen mit zunehmendem Radius auch höher liegen. Somit ist dieser Darstellung zu entnehmen, dass sich die Frequenz des Lärmmaximums bzw. die Frequenz des Geräuschmaximums mit zunehmendem Radius r zu höheren Werten verschiebt. Dies ist damit erklärbar, dass Turbulenzballen, die auch als Turbulenzzwiebeln bezeichnet werden können, mit zunehmendem Radius kleiner werden.

Figur 9 zeigt die Zackenhöhe H in Abhängigkeit des auf den Maximalradius R normierten Radius r. In diesem Diagramm, wie auch in dem Diagramm der Figur 10 ist nur etwa der Bereich des äußeren Drittels des untersuchten Rotorblattes dargestellt. In dem Diagramm sind 11 diskrete Werte $H_r$ in Abhängigkeit des normierten Radius jeweils durch kleine Quadrate dargestellt. Diese Werte wurden einzeln erfasst, indem jeweils eine Peakfrequenz zu dem jeweiligen Radius bestimmt wurde. Diese diskreten Zackenhöhen $H_r$ betreffen sämtlichst denselben Betriebspunkt. Zu diesen diskreten Werten $H_r$ wurde nun ein funktionaler Zusammenhang bestimmt, der als Kurve $H_8$ dargestellt ist. Diese Kurve $H_8$ stellt eine polynominale Approximation dieser diskret aufgenommenen Werte $H_r$ dar. Eine solche Annäherung mittels Polynome kann bspw. so erfolgen, dass die Standardabweichungen oder die Summe der Quadrate der Abweichungen minimiert wird. Es können grundsätzlich auch andere Annäherungen verwendet werden, wie bspw. ein Polynom höheren oder niedrigeren Grades. Dieser angenäherte Verlauf $H_8$ kann auch angegeben werden als $H = c_2 \cdot \Lambda_{p3}$, wobei $c_2$ hier den Wert 8 aufweist ($c_2 = 8$). Diese so ermittelte, radiusabhängige Funktion $H_8$ gibt somit den Verlauf der Höhe der Zacken in Abhängigkeit des Radius für einen Betriebspunkt an. Für andere Betriebspunkte ergeben sich andere Verläufe der Zackenhöhe H, was durch einen anderen Wert für $c_2$ wiedergegeben werden kann.

Entsprechend zeigen die Verläufe $H_4$ und $H_{10}$ entsprechende Verläufe der Zackenhöhe H für andere Betriebspunkte, wobei der Betriebspunkt der jeweiligen Kurve $H_4$ bzw. $H_{10}$ jeweils für alle dargestellten Radien gleich ist. Es hat sich gezeigt, dass die Aufnahme der diskreten $H_r$-Wert für andere Betriebspunkte entbehrlich ist und eine Veränderung der Konstanten $c_2$ ausreichend ist, um die Verläufe der Zackenhöhen H in Abhängigkeit des Radius für einen solchen anderen Betriebspunkt mit guter Genauigkeit darzustellen.

Figur 9 zeigt die Zusammenhänge für eine Starkwindanlage mit einer Auslegungsschnelllaufzahl von 7, nämlich für eine Windenergieanlage von Enercon mit Typenbezeichnung E82. Figur 10 zeigt ganz ähnliche Verläufe wie Figur 9, aber für eine Schwachwindanlage, nämlich eine Anlage von Enercon vom Typ E92-1. Auch hier sind Höhenverläufe H für unterschiedliche Betriebspunkte dargestellt und zur Verbesserung der Übersichtlichkeit werden hier die gleichen Bezeichnungen wie in der Figur 9 verwendet. Demnach liegt für einen Betriebspunkt eine Funktion $H_8$ vor, die durch ein Polynom fünften Grades mehrere diskret aufgenommene Werte $H_r$ approximiert. Für andere Betriebspunkte ergibt sich der Verlauf $H_4$ bzw. $H_{10}$. Den Verläufen $H_8$, $H_4$ und $H_{10}$ liegt der funktionale Zusammenhang $H = c_2 \cdot \Lambda_{p3}$ zugrunde mit $c_2 = 8$, $c_2 = 4$ bzw. $c_2 = 10$.

Um einen kontinuierlichen Verlauf entlang der Spannweite zu erhalten, wurde somit $\Lambda_{p3}\left(\frac{r}{R}\right)$ an verschieden diskreten spannweitigen Positionen berechnet und zur Definition eines Polynoms 6. Ordnung mittels einer optimale Kurvenanpassung herangezogen. Hierbei wurde die Anzahl der Polynomglieder, nämlich $\left(\dfrac{r}{R}\right)^0$ bis $\left(\dfrac{r}{R}\right)^5$, als Bezeichnung der Ordnung verwendet und dies bezeichnet somit ein Polynom fünften Grades.

Das sich ergebende Polynom fünften Grades für die Zackenhöhe H als Funktion des dimensionslosen Blattradius lautet für das Beispiel gemäß Figur 9:

$$H\left(\frac{r}{R}\right) = c_2 \cdot \Lambda_{p3} = c_2 \cdot \left[66808\left(\frac{r}{R}\right)^5 - 281611\left(\frac{r}{R}\right)^4 + 471582\left(\frac{r}{R}\right)^3 - 392499\left(\frac{r}{R}\right)^2 + 162465\left(\frac{r}{R}\right) - 26738\right]$$

Mit $c_2 = 8$ ergibt sich der bevorzugte Verlauf, der in Figur 9 als Verlauf $H_8$ dargestellt ist.

Der Auslegungsbereich wurde in Figur 9 durch die Grenzkurven $H_4$ mit $c_2 = 4$ sowie $H_{10}$ mit $c_2 = 10$ angezeigt. Die Linie mit quadratischen Symbolen beschreibt den Verlauf der an diskreten Stellen berechneten $\Lambda_{p3}$-Werte.

Figur 10 zeigt dabei die Auslegung für eine Schwachwindanlage mit einer Auslegungsschnelllaufzahl von 9. Wieder wurde der Auslegungsbereich, wie in Figur 9, mit $H_4$ für $c_2 = 4$ und mit $H_{10}$ für $c_2 = 10$ gekennzeichnet. Die Linie mit den quadratischen Symbolen beschreibt den Verlauf der an diskreten Stellen berechneten $\Lambda_{p3}$-Werte. Hier lautet das Polynom sechsten Grades für einen kontinuierlichen Verlauf:

$$H\left(\frac{r}{R}\right) = c_2 \cdot \Lambda_{p3} = c_2 \cdot \left[\begin{array}{l} 60351.47\left(\frac{r}{R}\right)^6 - 278386.84\left(\frac{r}{R}\right)^5 + {-}534315.59\left(\frac{r}{R}\right)^4 + 546057.47 \\ \left(\frac{r}{R}\right)^3 - 313179.86\left(\frac{r}{R}\right)^2 + 95422.62\left(\frac{r}{R}\right) - 12015.31 \end{array}\right]$$

Mit $c_2 = 8$ ergibt sich der bevorzugte Verlauf, der in Figur 10 mit $H_8$ gekennzeichnet ist.

Der Definitionsbereich des Polynoms erstreckt sich über eine dimensionslosen Radius $\dfrac{r}{R} = 0.5$ bis $1.0$. Im bevorzugten Fall liegt der Bereich zwischen $\dfrac{r}{R} = 0.65$ bis $1.0$, mindestens aber muss ein Bereich von $\dfrac{r}{R}$ von $0.7$ bis $1.0$ abgedeckt werden.

Falls ein Verlauf von $\dfrac{r}{R} < 0.6$ von Interesse ist, muss eine erweiterte Berechnung der $\Lambda_{p3}$-Werte stattfinden und die Faktoren der Polynom-Glieder angepasst werden.

Dabei ist der berechnete lokale $\Lambda_{p3}$-Wert vom lokalen Strömungszustand im betrachteten Betriebspunkt der Windenergieanlage abhängig. Daher muss die endgültige Dimension von Zackenhöhe und -Abstand (oder äquivalent $\Lambda_{p3}\left(\dfrac{r}{R}\right)$) so gewählt werden, dass die gezackte Hinterkante in einem ausgewählten Betriebspunkt der Windenergieanlage, optimaler Weise der Nennbetrieb, wirksam wird.

Die Berechnung von $\Lambda_{p3}\left(\dfrac{r}{R}\right)$ über das Corcos-Modell ist nicht trivial, und kann genauer über Zweipunkt-Korrelation von Wanddruckschwankungsmessungen im Windkanal am Profil in Hinterkantennähe erfolgen, wie in Referenz [2] dargelegt.

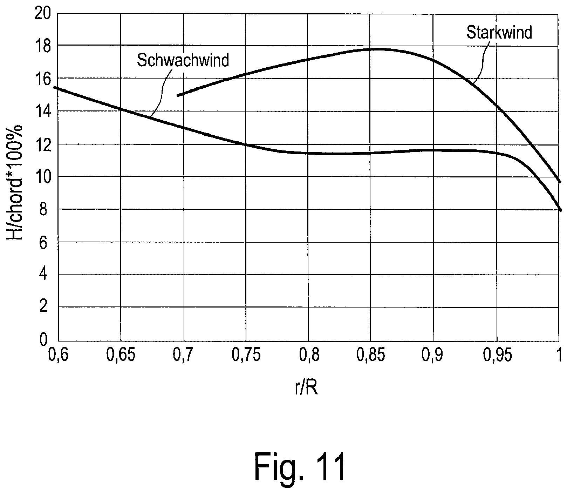

Figur 11 zeigt für eine, bzw. zwei Ausführungsform in einem Diagramm den Verlauf von Zackenhöhen, die auf die jeweilige lokale Profiltiefe normiert sind, über dem dimensionslosen Radius für Starkwind- und Schwachwind-auslegung. Es ist erkennbar, dass sich für die Auslegung für Starkwind eine andere Charakteristik ergibt. Es wird vorgeschlagen, das beim Design der Zackenhöhen zu berücksichtigen.

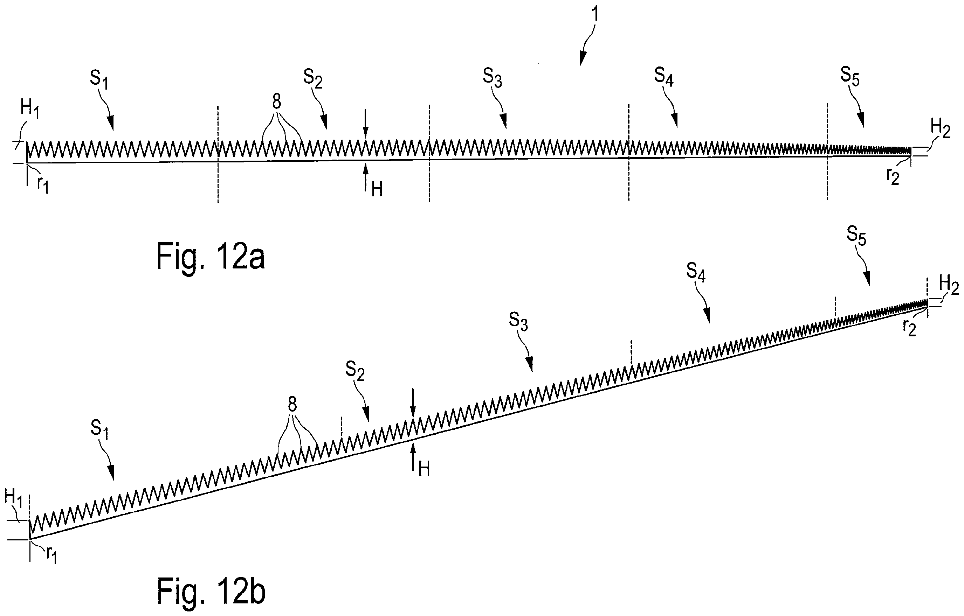

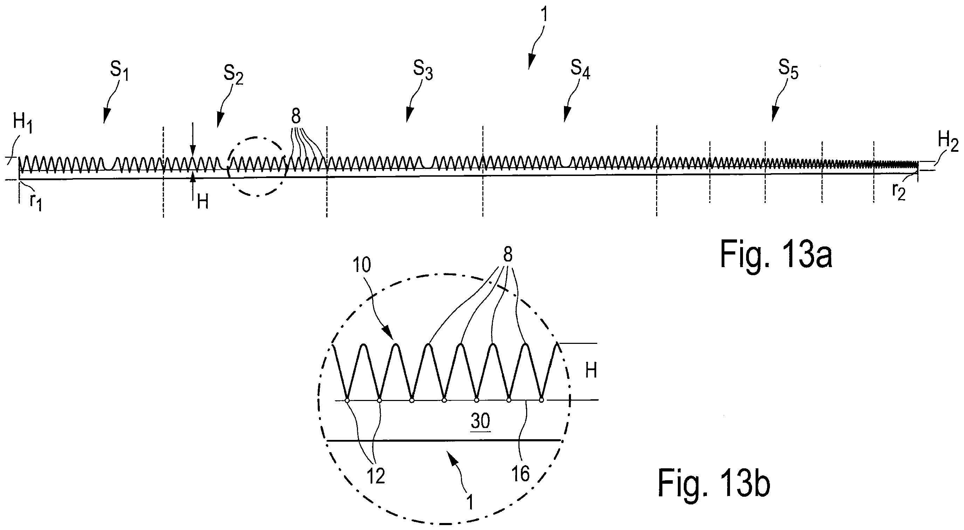

Dabei ist die Figur 12a, und im Übrigen auch die Figuren 12b, 13a und 13b, maßstabsgerecht. Es ist zu erkennen, dass die Zackenhöhe H von einem kleinen lokalen Radius $r_1$ zu einem großen lokalen Radius $r_2$ stark abnimmt. Um dies zu veranschaulichen, ist die Zackenhöhe $H_1$ für den kleinen Radius $r_1$ und die kleine Zackenhöhe $H_2$ für großen Radius $r_2$ eingezeichnet. Die gezeigte Hinterkante ist hier separat dargestellt und ist an einem Rotorblatt für eine Starkwindanlage noch anzubringen. Die gezeigte Hinterkante 1 weist hierbei eine Länge von etwa 12 Metern auf. Es ist zu erkennen, dass die Höhe $H_1$ deutlich größer ist, als die Höhe $H_2$ und dass die Zackenhöhe H der Zacken 8 zunächst gleich bleibt und dann zu dem großen, nämlich äußeren Radius $r_2$ stark abfällt. Aufgrund gleichzeitig abfallender Profiltiefe steigt somit die relative Zackenhöhe H der Zacken 8, nämlich die auf die jeweilige Profiltiefe bezogene Zackenhöhe zunächst an, und fällt dann zum Ende des Rotorblatts, nämlich bei $r_2$ ab.

Die perspektivische Darstellung gemäß Figur 12b verdeutlicht den Verlauf der Zackenhöhe nochmals. Es ist in beiden Figuren auch zu erkennen, dass zusammen mit der Zackenhöhe auch die Zackenbreite bzw. der Zackenabstand geringer wird.

Figuren 13a und 13b betreffen eine Hinterkante 1 für eine Schwachwindanlage. Auch ist zu erkennen, dass die Zackenhöhe $H_1$ zur Zackenhöhe $H_2$ stark abnimmt, nämlich von einem kleinen Radius $r_1$ zu einem großen Radius $r_2$ abnimmt. Die Radien $r_1$ und $r_2$ der Figur 13a einerseits und der Figuren 12a und 12b andererseits unterscheiden sich in ihrer Größe. Beide Hinterkanten 1 der Figuren 12a und 12b einerseits und der Figur 13a andererseits sind dabei etwa für ein äußeres Drittel des jeweils betreffenden Rotorblatts vorgesehen. Beide Hinterkanten 1 sind außerdem in Segmente $S_1$ bis $S_5$ unterteilt, wobei trotz unterschiedlicher Hinterkanten 1 gleiche Bezugszeichen verwendet wurden, um den Vergleich zu vereinfachen. Das fünfte Segment $S_5$ der Hinterkante 1 der Figur 13a ist zudem in weitere Untersegmente unterteilt. Es ist in Figur 13a zu erkennen, dass die Zackenhöhe H bereits im zweiten Segment abgenommen hat, wohingegen eine Abnahme im zweiten Segment der Hinterkante für die Starkwindanlage gemäß Figur 12 im zweiten Segment $S_2$ dort nicht erkennbar und auch noch nicht vorhanden ist. Insoweit unterscheiden sich der Höhenverlauf der Zackenhöhe H der Hinterkante 1 für Starkwindanlagen gemäß Figuren 12a und 12b von dem Verlauf gemäß Figur 13a für eine Schwachwindanlage.

Figur 13b zeigt zudem einen Ausschnitt der Hinterkante 1 der Schwachwindanlage, um eine mögliche, bautechnische Ausführung insbesondere der Zacken 8 zu verdeutlichen. Demnach ist zunächst zu erkennen, dass die Zacken 8 über eine Basis 30 miteinander verbunden sind. Die Zackenhöhe H wird von der Grundlinie bzw. Basislinie 16 ausgemessen, an der auch die Einschnittspitzen 12 somit angeordnet sind. Figur 13b zeigt auch, dass die Zackenspitze 10 mit einer leichter Rundung versehen sein kann.

[1] Theory and User Manual BLADOPT, ECN report, August, 2011 by B.H. Bulder, S.A.M. Barhorst, J.G. Schepers, F. Hagg

[2] M. S. Howe. Acoustics of Fluid-Structure Interactions. Cambridge University Press, online ISBN: 9780511662898, hardback ISBN: 9780521633208, paperback ISBN: 9780521054287 edition, 1998.

[3] G. M. Corcos. The structure of the turbulent pressure field in boundary-layer flows. Journal of Fluid Mechanics, 18:353-378, 1964.

[4] Andreas Herrig, Validation and Application of a Hot-Wire based Method for Trailing-Edge Noise Measurements on Airfoils, PhD Thesis, University of Stuttgart, 2011, ISBN 978-3-8439-0578.

Fertigungstechnisch wird der gewünschte Verlauf vorzugsweise erzeugt, indem eine vorgegebene Hinterkantenfahne durch einen automatisierten Schneidvorgang computergesteuert bearbeitet wird.

**Patentansprüche**

1. Verfahren zum Berechnen einer zu fertigenden Hinterkante für ein Rotorblatt eines aerodynamischen Rotors einer Windenergieanlage, wobei

   - das Rotorblatt in Bezug auf den Rotor radiale Positionen aufweist,
   - das Rotorblatt ein lokales, von auf den Rotor bezogenen radialen Positionen abhängiges Blattprofil aufweist
   - und die Hinterkante einen gezackten Verlauf mit mehreren Zacken aufweist,
   - wobei jede Zacke eine Zackenhöhe und eine Zackenbreite aufweist, und
   - die Zackenhöhe und/oder die Zackenbreite abhängig ihrer radialen Position und/oder abhängig vom lokalen Blattprofil ihrer radialen Position berechnet wird, **dadurch gekennzeichnet, dass** die Berechnung der Zackenhöhe H einer vorgegebenen radialen Position aus einer zugehörigen Kohärenzlängenskala $\Lambda_{p3}$ unter Berücksichtigung eines konstanten Faktors $c_2$ mit der Formel

$$H = c_2 \cdot \Lambda_{p3} \,.$$

erfolgt,

wobei die Kohärenzlängenskala $\Lambda_{p3}$ aus der Konvektionsgeschwindigkeit $U_c$ und der Scheitelfrequenz $f_{peak}$ nach folgender Formal berechnet werden:

$$\Lambda_{p3} = \frac{U_c}{\left(2 \cdot \pi \cdot f_{peak}\right)}.$$

2. Verfahren nach Anspruch 1,
**dadurch gekennzeichnet, dass**
die Zackenhöhe größer ist als die Zackenbreite, die Zackenbreite aus der Zackenhöhe berechnet wird und dafür das Verhältnis von Zackenhöhe zu Zackenbreite im Bereich von 3 bis 5 liegt, insbesondere etwa den Wert 4 beträgt.

3. Verfahren nach Anspruch 1 oder 2,
**dadurch gekennzeichnet, dass**
die Zackenhöhe und/oder die Zackenbreite über einen polynomialen Zusammenhang von ihrem lokalen Radius abhängt, vorzugsweise über einen polynomialen Zusammenhang vierten bis achten Grades, insbesondere fünften oder sechsten Grades, insbesondere sechsten Grades für Schwachwindstandorte und fünften Grades für Starkwindstandorte.

4. Verfahren nach einem der vorstehenden Ansprüche,
**dadurch gekennzeichnet, dass**
die Zacken zueinander unterschiedliche Zackenbreiten und/oder Zackenhöhen aufweisen.

5. Verfahren nach einem der vorstehenden Ansprüche,
**dadurch gekennzeichnet, dass**
die Berechnung so ausgelegt ist, dass bei Hinterkanten für Schwachwindstandorte die Zackenhöhe der Zacken mit zunehmendem Radius der radialen Position ihrer Zacken stärker abnimmt als bei Hinterkanten für Starkwindstandorte und/oder dass die Zackenhöhe gleicher relativer radialer Position bei Hinterkanten für Windenergieanlagen für Schwachwindstandorte kleiner ist, als bei Hinterkanten für Windenergieanlagen gleicher Leistungsklasse, insbesondere gleicher Nennleistung, für Starkwindstandorte.

6. Verfahren zum Berechnen einer zu fertigenden Hinterkante für ein Windergieanlagen-Rotorblatt, wobei

- das Rotorblatt in Bezug auf den Rotor radiale Positionen aufweist,
- das Rotorblatt ein lokales, von auf den Rotor bezogenen radialen Positionen abhängiges Blattprofil aufweist
- und die Hinterkante einen gezackten Verlauf mit mehreren Zacken aufweist,
- wobei jede Zacke eine Zackenhöhe und eine Zackenbreite aufweist, und
- die Zackenhöhe und/oder die Zackenbreite abhängig ihrer radialen Position und/oder abhängig vom lokalen Blattprofil ihrer radialen Position berechnet wird,

**dadurch gekennzeichnet, dass** die Berechnung der Zackenhöhe H einer vorgegebenen radialen Position aus der zugehörigen Anströmgeschwindigkeit $V_{eff}$, der zugehörigen Peakfrequenz $f_{peak}$ des Geräuschspektrums und einem vorbestimmten Faktor k berechnet wird, mit der Formel

$$H = k \cdot \frac{V_{eff}}{f_{peak}}.$$

erfolgt.

7. Windenergieanlagen-Rotorblatt (2), mit
einer Längsrichtung,
einer Hinterkante (1), ein lokales, von Positionen entlang der Langsachse abhängiges Blattprofil aufweist,

- wobei die Hinterkante (1) einen gezackten Verlauf mit mehreren Zacken (8) aufweist,
- wobei jede Zacke (8) eine Zackenhöhe und eine Zackenbreite aufweist, und
- wobei die Zackenhöhe (H) und/oder die Zackenbreite ($\lambda$) abhängig von ihrer Position entlang der Längsachse und/oder abhängig vom lokalen Blattprofil ihrer Position entlang der Längsachse ist, **dadurch gekennzeichnet,**

**dass** sich die Zackenhöhe H einer vorgegebenen Position entlang der Längsachse aus einer zugehörigen Kohärenzlängenskala $\Lambda_{p3}$ unter Berücksichtigung eines konstanten Faktors $c_2$ mit der Formel

$$H = c_2 \cdot \Lambda_{p3}.$$

ergibt,

wobei die Kohärenzlängenskala $\Lambda_{p3}$ aus der Konvektionsgeschwindigkeit $U_c$ und der Scheitelfrequenz $f_{peak}$ nach folgender Formal berechnet werden:

$$\Lambda_{p3} = \frac{U_c}{\left(2 \cdot \pi \cdot f_{peak}\right)}.$$

8. Windenergieanlagen-Rotorblatt (2), mit
einer Längsrichtung, einer Hinterkante (1), ein lokales, von Positionen entlang der Langsachse abhängiges Blattprofil aufweist,

- wobei die Hinterkante (1) einen gezackten Verlauf mit mehreren Zacken (8) aufweist,
- wobei jede Zacke (8) eine Zackenhöhe und eine Zackenbreite aufweist, und
- wobei die Zackenhöhe (H) und/oder die Zackenbreite ($\lambda$) abhängig von ihrer Position entlang der Längsachse und/oder abhängig vom lokalen Blattprofil ihrer Position entlang der Längsachse ist, **dadurch gekennzeichnet, dass** sich die Zackenhöhe H einer vorgegebenen radialen Position aus der zuge hörigen Anströmgeschwindigkeit $V_{eff}$, der zugehörigen Peakfrequenz $f_{peak}$ des Geräuschspektrums und einem vorbestimmten Faktor k berechnet wird, mit der Formel

$$H = k \cdot \frac{V_{eff}}{f_{peak}}.$$

ergibt.

9. Windenergieanlagen-Rotorblatt nach Anspruch 7 oder 8,
**dadurch gekennzeichnet, dass**
die Zackenhöhe größer ist als die Zackenbreite und das Verhältnis von Zackenhöhe zu Zackenbreit im Bereich von 3 bis 5 liegt, insbesondere etwa den Wert 4 beträgt.

10. Windenergieanlagen-Rotorblatt nach Anspruch 9,
**dadurch gekennzeichnet, dass**
die Zackenhöhe und/oder die Zackenbreite über eine polynomiale Funktion von ihrer radialen Position abhängig ist, vorzugsweise über eine polynomiale Funktion vierter bis achten Grades, insbesondere sechsten Grades, insbesondere sechsten Grades für Schwachwindstandorte und fünften Grades für Starkwindstandorte.

11. Windenergieanlagen-Rotorblatt nach Anspruch 10,
**dadurch gekennzeichnet, dass**
sie für eine Windenergieanlage für einen Schwachwindstandort ausgelegt ist, wobei die Zackenhöhe mit zunehmendem Radius abfällt.

12. Windenergieanlagen-Rotorblatt nach Anspruch 7 oder 8,
**dadurch gekennzeichnet, dass**
sie für eine Windenergieanlage für einen Starkwindstandort ausgelegt ist, wobei die Zackenhöhe mit zunehmendem Radius zunächst ansteigt und weiter ansteigendem Radius wieder abfällt.

13. Windenergieanlage mit einem Rotorblatt gemäß einem der Ansprüche 7 bis 12.

**Claims**

1. A method for calculating a trailing edge that is to be produced for a rotor blade of an aerodynamic rotor of a wind power installation, wherein

   - the rotor blade has radial positions with respect to the rotor,
   - the rotor blade has a local blade profile that is dependent on the radial positions with respect to the rotor
   - and the trailing edge has a jagged profile having a plurality of spikes,
   - wherein each spike has a spike height and a spike width, and
   - the spike height and/or the spike width is calculated as a function of the radial position thereof and/or as a function of the local blade profile of the radial position thereof,

   **characterized in that**
   the calculation of a spike height H of a predetermined radial position is calculated from the associated coherence length scale $\Lambda_{p3}$, taking into account a constant factor $c_2$, using the formula

   $$H = c_2 \cdot \Lambda_{p3}.$$

   wherein the coherence length scale $\Lambda_{p3}$ is calculated from the convection velocity $U_c$ and the peak frequency $f_{peak}$ according to the following calculation:

   $$\Lambda_{p3} = \frac{U_c}{\left(2 \cdot \pi \cdot f_{peak}\right)}.$$

2. The method according to Claim 1,
   **characterized in that**
   the spike height is greater than the spike width, the spike width is calculated from the spike height and therefore the ratio of the spike height to the spike width falls in the range of 3 to 5, in particular approximately having the value 4.

3. The method according to Claim 1 or 2,
   **characterized in that**
   the spike height and/or the spike width depends on the local radius thereof by means of a polynomial relationship, preferably a fourth to eighth degree polynomial relationship, in particular fifth or sixth degree, in particular sixth degree for low-wind locations and fifth degree for strong-wind locations.

4. The method according to one of the above claims,
   **characterized in that**
   the spikes have spike widths and/or spike heights that vary in relation to one another.

5. The method according to one of the above claims,
   **characterized in that**
   the calculation is set up in such a way that, in the case of trailing edges for low-wind locations, the spike height of the spikes sees a greater decrease in the spikes thereof as the radius of the radial position of the spikes thereof increases than in the case of trailing edges for strong-wind locations, and/or that the spike height of the same relative radial position in the case of trailing edges for wind power installations for low-wind locations is lower than in the case of trailing edges for wind power installations in strong-wind locations of the same power class, in particular of the same nominal power.

6. A method for calculating a trailing edge that is to be produced for a rotor blade of a wind power installation, wherein

   - the rotor blade has radial positions with respect to the rotor,
   - the rotor blade has a local blade profile that is dependent on the radial positions with respect to the rotor
   - and the trailing edge has a jagged profile having a plurality of spikes,
   - wherein each spike has a spike height and a spike width, and
   - the spike height and/or the spike width is calculated as a function of the radial position thereof and/or as a function of the local blade profile of the radial position thereof,

**characterized in that**
the calculation of the spike height H of a predetermined radial position is calculated from the associated flow velocity $V_{eff}$, the associated peak frequency $f_{peak}$ of the noise spectrum and a predetermined factor k using the formula

$$H = k \cdot \frac{V_{eff}}{f_{peak}}.$$

7. A rotor blade (2) of a wind power installation, comprising

   - a longitudinal axis,
   - a trailing edge (1),
   - a local blade profile that is dependent on positions along the longitudinal axis,
   - wherein the trailing edge (1) has a jagged profile having a plurality of spikes (8),
   - wherein each spike (8) has a spike height and a spike width, and
   - wherein the spike height (H) and/or the spike width ($\lambda$) is a function of the longitudinal position thereof and/or is a function of the local blade profile of the longitudinal position thereof,

   **characterized in that**
   a spike height H of a predetermined position along the longitudinal axis is calculated from the associated coherence length scale $\Lambda_{p3}$, taking into account a constant factor $c_2$, using the formula

$$H = c_2 \cdot \Lambda_{p3},$$

   wherein the coherence length scale $\Lambda_{p3}$ is calculated from the convection velocity $U_c$ and the peak frequency $f_{peak}$ according to the following calculation:

$$\Lambda_{p3} = \frac{U_c}{\left(2 \cdot \pi \cdot f_{peak}\right)}.$$

8. A rotor blade (2) of a wind power installation, comprising

   a longitudinal axis, trailing edge (1), a local blade profile that is dependent on the positions along the longitudinal axis,
   wherein the trailing edge (1) has a jagged profile having a plurality of spikes (8),
   wherein each spike (8) has a spike height and a spike width,
   wherein the spike height (H) and/or the spike width ($\lambda$) is a function of the longitudinal position thereof and/or is a function of the local blade profile of the longitudinal position thereof,
   **characterized in that**

   a spike height (H) of a predetermined radial position is calculated from the associated flow velocity ($V_{eff}$), the associated peak frequency $f_{peak}$ of the noise spectrum and a predetermined factor k using the formula

$$H = k \cdot \frac{V_{eff}}{f_{peak}}.$$

9. The rotor blade of a wind power installation according to Claim 7 or 8,
   **characterized in that**
   the spike height is greater than the spike width and the ratio of the spike height to the spike width falls in the range of 3 to 5, in particular approximately having the value 4.

10. The rotor blade of a wind power installation according to Claim 8 or 9,

**characterized in that**

the spike height and/or the spike width depends on the radial position thereof by means of a polynomial function, preferably a fourth to eighth degree polynomial function, in particular sixth degree, in particular sixth degree for low-wind locations and fifth degree for strong-wind locations.

11. The rotor blade of a wind power installation according to Claim 10,
    **characterized in that**
    it is set up for a wind power installation for a low-wind location, wherein the spike height decreases as the radius increases.

12. The rotor blade of a wind power installation according to Claim 7 or 8,
    **characterized in that**
    it is set up for a wind power installation for a strong-wind location, wherein, **in that** the spike height initially increases as the radius increases, and then decreases again as the radius continues to increase.

13. A wind power installation having a rotor blade according to any one of the claims 7 to 12.

**Revendications**

1. Procédé servant à calculer un bord de fuite à finaliser pour une pale de rotor d'un rotor aérodynamique d'une éolienne, dans lequel

    - la pale de rotor présente des positions radiales par rapport au rotor,
    - la pale de rotor présente un profil de pale local dépendant de positions radiales par rapport au rotor,
    - et le bord de fuite présente un profil denté comprenant plusieurs pointes,
    - dans lequel chaque pointe présente une hauteur de pointe et une largeur de pointe, et
    - la hauteur de pointe et/ou la largeur de pointe sont calculées en fonction de leur position radiale et/ou en fonction du profil de pale local de leur position radiale,

    **caractérisé en ce que**
    le calcul de la hauteur de pointe H d'une position radiale prédéfinie est effectué à partir d'une échelle de longueur de cohérence $\Lambda_{p3}$ associée en tenant compte d'un facteur $c_2$ constant avec la formule

    $$H = c_2 \cdot \Lambda_{p3}$$

    dans lequel l'échelle de longueur de cohérence $\Lambda_{p3}$ est calculée à partir de la vitesse de convection $U_C$ et de la fréquence de crête $f_{peak}$ selon la formule qui suit :

    $$\Lambda_{p3} = \frac{U_c}{\left(2 \cdot \pi \cdot f_{peak}\right)}.$$

2. Procédé selon la revendication 1,
    **caractérisé en ce que**
    la hauteur de pointe est plus grande que la largeur de pointe, la largeur de pointe est calculée à partir de la hauteur de pointe, et, à cet effet, le rapport entre la hauteur de pointe et la largeur de pointe se situe dans la plage allant de 3 à 5, en particulier présente environ la valeur de 4.

3. Procédé selon la revendication 1 ou 2,
    **caractérisé en ce que**
    la hauteur de pointe et/ou la largeur de pointe dépendent de leur rayon local par un rapport polynomial, de préférence par un rapport polynomial de quatrième à huitième ordre, en particulier de cinquième ou de sixième ordre, en particulier de sixième ordre pour des emplacements à vent faible et de cinquième ordre pour des emplacements à vent fort.

**4.** Procédé selon l'une quelconque des revendications précédentes,
**caractérisé en ce que**
les pointes présentent des largeurs de pointe et/ou des hauteurs de pointe différentes.

**5.** Procédé selon l'une quelconque des revendications précédentes,
**caractérisé en ce que**
le calcul est configuré de telle sorte que, dans le cas de bords de fuite pour des emplacements à vent faible, la hauteur de pointe des pointes diminue plus fortement au fur et à mesure que le rayon de la position radiale de leurs pointes augmente que dans le cas de bords de fuite pour des emplacements à vent fort, et/ou que la hauteur de pointe d'une position radiale relative identique est, dans le cas de bords de fuite pour des éoliennes pour des emplacements à vent faible, plus petite que dans le cas de bords de fuite pour des éoliennes de classe de puissance identique, en particulier de puissance nominale identique, pour des emplacements à vent fort.

**6.** Procédé servant à calculer un bord de fuite à finaliser pour une pale de rotor d'éolienne, dans lequel

- la pale de rotor présente des positions radiales par rapport au rotor,
- la pale de rotor présente un profil de pale local dépendant de positions radiales par rapport au rotor,
- et le bord de fuite présente un profil dentelé comprenant plusieurs pointes,
- dans lequel chaque pointe présente une hauteur de pointe et une largeur de pointe, et
- la hauteur de pointe et/ou la largeur de pointe sont calculées en fonction de leur position radiale et/ou en fonction du profil de pale local de leur position radiale,

**caractérisé en ce que**
le calcul de la hauteur de pointe H d'une position radiale prédéfinie est effectué à partir de la vitesse d'affluence $V_{eff}$ associée, de la fréquence de crête $f_{peak}$ associée du spectre sonore et d'un facteur k prédéterminé, avec la formule

$$H = k \cdot \frac{V_{eff}}{f_{peak}}.$$

**7.** Pale de rotor d'éolienne (2) comprenant
une direction longitudinale,
un bord de fuite (1), un profil de pale local dépendant de positions le long de l'axe longitudinal,

- dans laquelle le bord de fuite (1) présente un profil dentelé comprenant plusieurs pointes (8),
- dans laquelle chaque pointe (8) présente une hauteur de pointe et une largeur de pointe, et
- dans laquelle la hauteur de pointe (H) et/ou la largeur de pointe ($\lambda$) dépendent de leur position le long de l'axe longitudinal et/ou dépendent du profil de pale local de leur position le long de l'axe longitudinal,

**caractérisée en ce que**
la hauteur de pointe H d'une position prédéfinie le long de l'axe longitudinal résulte d'une échelle de longueur de cohérence $\Lambda_{p3}$ associée en tenant compte d'un facteur $c_2$ constant avec la formule

$$H = c_2 \cdot \Lambda_{p3},$$

dans laquelle l'échelle de longueur de cohérence $\Lambda_{p3}$ est calculée à parti de la vitesse de convection $U_c$ et de la fréquence de crête $f_{peak}$ selon la formule qui suit :

$$\Lambda_{p3} = \frac{U_c}{(2 \cdot \pi \cdot f_{peak})}.$$

**8.** Pale de rotor d'éolienne (2) comprenant
une direction longitudinale, un bord de fuite (1), un profil de pale local dépendant de positions le long de l'axe longitudinal,

- dans laquelle le bord de fuite (1) présente un profil dentelé comprenant plusieurs pointes (8),
- dans laquelle chaque dent (8) présente une hauteur de pointe et une largeur de pointe, et
- dans laquelle la hauteur de pointe (H) et/ou la largeur de pointe ($\lambda$) dépendent de leur position le long de l'axe longitudinal et/ou dépendent de leur profil de pale local de leur position le long de l'axe longitudinal,

**caractérisée en ce que**
la hauteur de pointe H d'une position radiale prédéfinie est calculée à partir de la vitesse d'affluence $V_{eff}$ associée, de la fréquence de crête $f_{peak}$ associée du spectre sonore et d'un facteur k prédéterminé, avec la formule

$$H = k \cdot \frac{V_{eff}}{f_{peak}}.$$

9. Pale de rotor d'éolienne selon la revendication 7 ou 8,
   **caractérisée en ce que**
   la hauteur de pointe est plus grande que la largeur de pointe et le rapport entre la hauteur de pointe et la largeur de pointe se situe dans la plage allant de 3 à 5, en particulier présente environ la valeur de 4.

10. Pale de rotor d'éolienne selon la revendication 9,
    **caractérisée en ce que**
    la hauteur de pointe et/ou la largeur de pointe dépend de leur position radiale par une fonction polynomiale, de préférence par une fonction polynomiale de quatrième à huitième rang, en particulier de sixième rang, en particulier de sixième rang pour des emplacements à vent faible et de cinquième rang pour des emplacements à vent fort.

11. Pale de rotor d'éolienne selon la revendication 10,
    **caractérisée en ce que**
    elle est configurée pour une éolienne pour un emplacement à vent faible, dans laquelle la hauteur de pointe diminue au fur et à mesure que le rayon augmente.

12. Pale de rotor d'éolienne selon la revendication 7 ou 8,
    **caractérisée en ce que**
    elle est configurée pour une éolienne pour un emplacement à vent fort, dans laquelle la hauteur de pointe augmente dans un premier temps au fur et à mesure que le rayon augmente puis diminue à nouveau avec un rayon croissant.

13. Eolienne comprenant une pale de rotor selon l'une quelconque des revendications 7 à 12.

Fig. 1

Fig. 2

EP 2 929 178 B1

Fig. 3

$c\left(\dfrac{r}{R}\right)$

20

2

1'

6

r

1

R

26

$\delta_1$

2   18

20

22

24

Fig. 4

1

H

H₃

H₁

H₂

R

Fig. 5

Fig. 6

Fig. 7

Fig. 8

Fig. 9

Fig. 10

Fig. 11

Fig. 12a

Fig. 12b

Fig. 13a

Fig. 13b

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 0652367 A1
- EP 1314885 B1
- US 20030175121 A1

**In der Beschreibung aufgeführte Nicht-Patentliteratur**

- **B.H. BULDER ; S.A.M. BARHORST ; J.G. SCHEPERS ; F. HAGG.** Theory and User Manual BLADOPT, ECN report. August 2011
- **M. S. HOWE.** Acoustics of Fluid-Structure Interactions. Cambridge University Press, 1998
- **G. M. CORCOS.** The structure of the turbulent pressure field in boundary-layer flows. *Journal of Fluid Mechanics,* 1964, vol. 18, 353-378
- Validation and Application of a Hot-Wire based Method for Trailing-Edge Noise Measurements on Airfoils. **ANDREAS HERRIG.** PhD Thesis. University of Stuttgart, 2011